# EUROPEAN PATENT SPECIFICATION

(11) **EP 2 521 510 B1**
(45) Date of publication and mention of the grant of the patent: **12.11.2014**
(21) Application number: 11714385.9
(22) Date of filing: 05.01.2011
(51) Int. Cl.: A61C 8/00

(54) **DENTAL IMPLANT WITH AN IMPROVED STRUCTURE**
DENTALIMPLANTAT MIT EINER VERBESSERTEN STRUKTUR
IMPLANT DENTAIRE AVEC UNE STRUCTURE AMÉLIORÉE

(30) Priority: 05.01.2010 IT PI20100001
(43) Date of publication of application: 14.11.2012
(73) Proprietor: Danza, Matteo, 65124 Pescara (IT)
(72) Inventor: Danza, Matteo, 65124 Pescara (IT)
(74) Representative: Celestino, Marco
(86) International application number: PCT/IB2011/000012
(87) International publication number: WO 2011/083400

(56) References cited:
- WO-A1-2005/072639
- WO-A1-2007/086622
- WO-A1-2009/009909
- WO-A2-2009/092900
- US-A1- 2008 261 175

## Description

### Field of the invention.

The present invention relates to the field of osteointegrated dental implantology and, in particular, it relates to an improved structure of dental implant.

### Description of the prior art.

As well known, dental implants are used for rehabilitation of patients partially, or completely, toothless.

An endosseus dental implant comprises normally an externally screw-threaded element for fixing to the upper or lower jaw bone, which is the endosseous portion of the implant, and a pillar, also-called "abutment tooth", that is connected to one end of the endosseus dental implant, in order to protrude for a certain extension into the oral cavity of the patient. Onto the pillar the prosthetic restoration is then applied. To avoid the rotation of the installed prosthetic restoration, the endosseus dental implant has at the upper portion an hexagonal hole in which a projection engages without possibility of mutual rotation, which also has hexagonal cross section and protrudes from the pillar. Alternatively, a hexagonal projection can be provided, or with other geometric shape, protruding from the implant that is adapted to couple in a hexagonal hole, or with other geometric shape, provided on the lower face of the pillar.

For bearing the loads caused by mastication the endosseous portion, which represents the structural basis of the dental implant, once installed has to be perfectly integrated in the bone tissue. The forces generated by mastication are, in fact, transferred through the implant screw to the peri-implant bone structure through the bone/implant interface. The bone is a living organic tissue and has structural features significantly different from those of the used materials for making the implant screws, such as Titanium, Ceramic, Zirconium.

The known dental implants perform a non-uniform distribution of the loads to the thread/bone interface. This causes a super-loading of the peri-implant bone tissue and causes, therefore, a gradual resorption of the bone that, in the most serious cases, can extend beyond the deepest threads of the screw and can cause, then, a weaker osteointegration and a disengagement of the dental implant.

In case of multiple implants this phenomenon is enhanced since the load distribution on the bone tissue is the result of the load of the different dental implants as inserted.

For attempting to improve the stability of the implant in the implant site, and then to make uniform the distribution of the loads on the bone tissue, dental implants have been proposed having in the crestal portion a first thread with two or more ridges and in the central portion and apical portion a second thread with a single ridge.

However, also this structure produces high stress on the bone structure surrounding the implant in addition to high compression on the implant body. In fact, the implant site, which is made by a rotating tool, normally a cutter, has a axisymmetric shape, whereas the profile of the implant screw, due to the presence of portions with different profiles, is strongly discontinuous.

In US2008/261175 a dental implant is described comprising an endosseous body having an apical portion, a central portion and a distal portion along which a thread extends that comprises a plurality of ridges alternated to a plurality of root spaces. The implant has, furthermore, a collar next to the crestal portion and that, in use, is arranged at the cortical crestal bone portion of the upper or lower jaw bone, of the patient. The thread is "doubled" at a certain height of the endosseous body giving rise to a double thread comprising two ridges of determined thickness separated by a certain distance. In particular, the distance between the two ridges of the double thread decreases progressively going from the apical portion towards the crestal portion.

In WO2007/086622 a dental implant is described having an endosseous body comprising a predetermined number of threads having all a same size and a collar having threads all of a same size and less than the threads of the endosseous body. Such particular distribution of the threads has the object of improving the bone-implant contact and to provide a better distribution of the stress by mastication with respect to known dental implants.

### Summary of the invention

It is a feature of the invention to provide a dental implant that can be introduced in the alveolar processes of the jaw bones without trauma for the surrounding bone, causing a progressive vertical and horizontal bone compaction, in order to improve the bone density and to obtain an excellent primary stability.

It is also a feature of the invention to provide a dental implant that during introduction in the implant site avoids the production of stress both on the bone structure and on the implant same.

It is another feature of the invention to provide a dental implant capable of providing a better bone integration, or osteointegration, with respect to the dental implants of the prior art and avoids a resorption of the bone tissue.

These and other features are accomplished with one exemplary dental implant, according to the invention, that is adapted to be arranged in the dental arches of a patient in surgery implant-prosthetic operations, said dental implant comprising an endosseous body equipped with:
- an apical portion, a central portion and a crestal portion along which a thread extends, in particular a double thread, that comprises a plurality of ridges alternated to a plurality of root spaces, at least one part of said plurality of ridges having a concave profile edge with a predetermined radius of curvature;
- a collar next to said crestal portion and having a predetermined height, said collar located, in use, at the surface of the upper or lower jaw bone of the patient, in particular of the crestal cortical upper or lower jaw bone of the patient;
   whose main feature is that:
   the radius of curvature of the concave profile of the edge of the ridges increases progressively going from the apical portion to the crestal portion.

In particular, the concavity of the edge of the ridges forms a double thread comprising two ridges approached to each other whose distance increases progressively going from the apical portion to the crestal portion.

Advantageously, at least one part of the root spaces, set between two adjacent ridges of the thread, has a concave profile.

In a preferred exemplary embodiment, all the root spaces set between two adjacent ridges of the thread have a concave profile with a predetermined concavity. More precisely, the radius of curvature r' of the root spaces decreases progressively going from the apical portion to the crestal portion of the dental implant.

In particular, since the radius of curvature of the concave profile of the root spaces decreases progressively going from the apical portion to the crestal portion of the implant, at the root spaces a space of decompression is obtained for the surrounding bone tissue and a horizontal compaction is achieved of the trabecular bone, which in itself is not much compact.

In particular, the tool used to make the thread of the implant withdraws progressively, i.e. deepens progressively less in the material, going from the apical portion to the crestal portion. Such tool is responsible both of the progressive increase of the thickness of the threads, and of the decrease of the radius of curvature r' of the root spaces, which occurs proceeding from the apical portion towards the crestal portion of the implant.

Advantageously, the ridges of the thread have a radius that increases progressively, according to a determined function, going from the apical portion to the crestal portion.

Advantageously, the thickness of the edge of the concave profiled ridges increases progressively going from the apical portion to the crestal portion.

In particular, the collar of the endosseous body has a corrugated surface comprising a plurality of micro-grooves, or micro-channels. More precisely, the micro-channels are adapted to apply an appropriate mechanical stimulation on the surrounding cortical bone tissue and to improve the bone integration, or osteointegration, in order to avoid the resorption of the bone tissue.

Advantageously, the collar of the endosseous body has a tapered surface that grows thinner starting from a first end next to the crestal portion of the implant towards a second end opposite to the first end, in order to provide a substantially frustoconical shape.

Preferably, the collar has a frustoconical shape that has a side surface with substantially concave profile.

In particular, the concave profile of the collar can be selected from the group consisting of:
- semiparabolic profile;
- parabolic profile;
- arc of circumference;
- arc of ellipse;
or a combination thereof.

Furthermore, the collar has advantageously, a plurality of substantially circumferential micro-grooves, or micro-channels.

The particular morphology of the collar increases the contact surface with the bone and protects a larger amount of periosteum, in the most critical zone of the alveolar bone, i.e. the cortical zone. In particular, the conicity of the collar allows a less traumatic contact, with reduced pressure, on the crestal cortical bone and avoids the compression of the blood vessels present in the corresponding zone of the alveolar bone. In order to enhance the criteria described of low compression on the cortical bone, a concavity of the global morphology of the collar can be added to the conicity of the collar implant. Such concavity provides to the cortical bone a higher transversal space for decompression of the volume of bone that surrounds it once it has been compressed by the movement of the larger threads.

The general morphology of the implant is conical. Such conicity develops mainly from a conicity of the core of the implant same. More precisely, the thread has a substantially cylindrical shape up to the fourth-from-last thread turn, proceeding in a crestal-apical direction, for then thinning gradually assuming a shape substantially conical at the apical portion. The accentuated conicity of the apical threads allows a quicker and easier engagement of the dental implant with the bone walls of a suitably prepared implant site.

In particular, the dental implant comprises, furthermore, a prosthetic pillar, or abutment tooth, having an end that is adapted to engage with said collar in a rotationally blocked way, and the other end protruding for a determined portion from said collar, in order to be located, in use, in the mouth of the patient. More precisely, the end protruding in the mouth is adapted to couple in a rotationally blocked way with a prosthetic component.

Preferably, the collar and the prosthetic pillar have surfaces that can be mutually coupled.

Advantageously, the mutually coupled surfaces of the collar and of the prosthetic pillar comprise:
- first mutually coupled surfaces arranged on respective polyhedral surfaces, said first surfaces coupled to prevent a relative rotation between the prosthetic pillar and the implant;
- second mutually coupled surfaces arranged on respective conical surfaces, said second mutually coupled surfaces adapted, on the one hand, to provide a hermetic matching between the prosthetic pillar and the collar, in order to avoid biological liquid to leak between the two components, and on the other hand to increase the stability of the matching.

For example, the first polyhedral surfaces may have a cross section selected from the group consisting of:
- a triangular cross section;
- a square cross section;
- a rectangular cross section;
- a hexagonal cross section;
- a pentagonal cross section;
- an octagonal cross section;
- a combination thereof.

In an exemplary embodiment of the invention, the collar is not tapered, such that it is cylindrical but maintains a concave morphology.

In a further exemplary embodiment of the invention, the endosseous body, the collar and the prosthetic pillar are made as a single part, said collar comprising:
- a first substantially concave frustoconical portion;
- a second substantially concave frustoconical portion, said second substantially concave frustoconical portion being mirror-like to said first portion.

In particular, the first substantially concave frustoconical portion is adapted, in use, to be put at the crestal cortical bone of the patient, whereas the second substantially concave frustoconical portion is adapted to be located, in use, at the gum, such that the prosthetic pillar, which represents the continuation of the implant, protrudes in the mouth.

Advantageously, both the first and the second substantially concave frustoconical portion of the collar have a corrugated surface comprising a plurality of micro-channels, or micro-grooves.

Advantageously, the prosthetic pillar has a substantially frustoconical shape and comprises a flat face that is adapted to avoid the rotation of the prosthetic component that reproduces the missing dental element and that is adapted to engage with the dental implant.

Furthermore, the prosthetic pillar, at the border with the second portion substantially frustoconical of the collar, has a smooth small collar, for example with a chamfer preparation, which represents the closure edge for the prosthetic component.

Advantageously, at the free end, i.e. the crown end, the prosthetic pillar has a multi-angle hollow protruding portion, said hollow protruding portion adapted to engage with a predetermined tool used for carrying and inserting the dental implant in the implant site.

The multi-angle hollow protruding portion of the prosthetic pillar can have for example hexagonal shape, or other geometric shape.

Preferably, the hollow protruding portion has a screw-threaded recess that is adapted to engage with at least one of the following elements:
- a ball fastening for overdenture;
- a screw fastening for a mesostructure implant;
- a rod for overdenture;
- a prosthesis of "Toron Bridge" and/or "Implant Bridge" type.

Advantageously, the endosseous body has, furthermore, a groove, in particular a double groove, which extends along a substantially vertical direction and has a substantially helical shape, said thread having, at said substantially vertical groove, a non-cutting profile edge during the introduction of said implant in said implant site, and a cutting profile edge during the extraction of said implant from said implant site.

### Brief description of the drawings.

The invention will be now shown with the following description of an exemplary embodiment thereof, exemplifying but not limitative, with reference to the attached drawings in which:
- Fig. 1 shows a perspective elevation front view of an endosseous body provided in an improved structure of dental implant, according to the invention;
- Fig. 2 shows in detail a portion of the endosseous body of the improved structure of dental implant of Fig. 1, for highlighting some structural features thereof;
- Figs. 3 and 4 show different parts that make up the improved structure of dental implant, according to the invention, respectively a perspective elevation exploded front view and a perspective elevation front view of an assembled configuration;

- Fig. 5 diagrammatically shows an elevational side view of a portion of the endosseous body of Fig. 1 for highlighting some structural features of the collar;

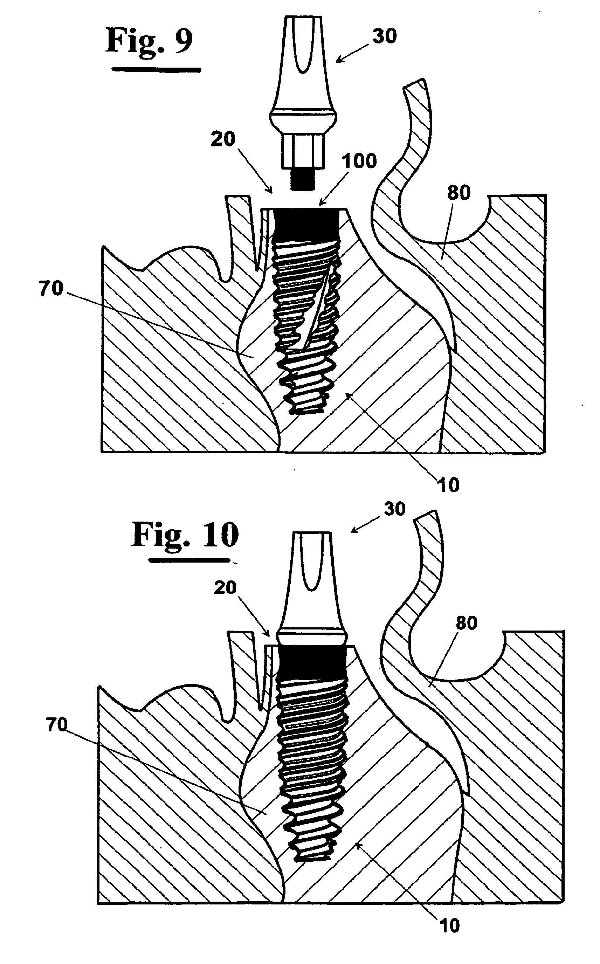

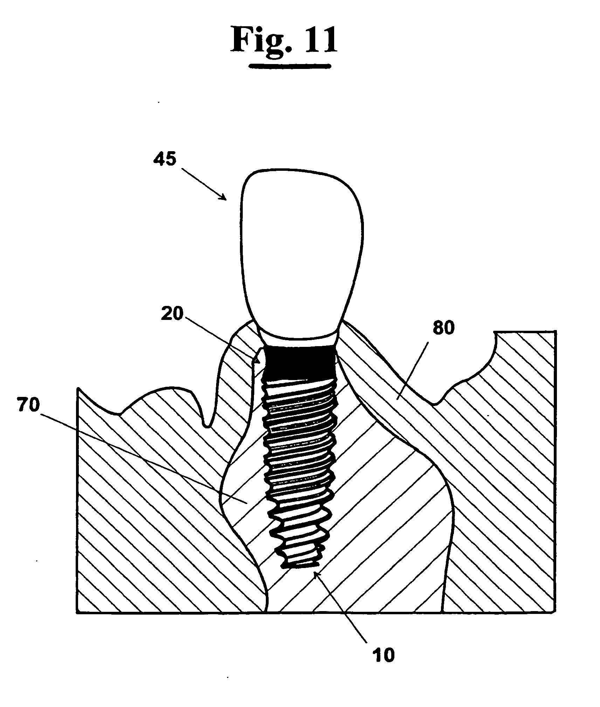

- Figs. 6A, 7A, 9-11 show diagrammatically a possible succession of steps through which it is possible to install a dental implant, according to the invention, in an implant site;
- Figs. 6B and 7B show diagrammatically transversal cross sections of the dental implant of Fig. 1 respectively during a step of introduction in the implant site and during an extraction step from the implant site for showing the particular profile of the thread at the substantially vertical groove;
- Fig. 8 diagrammatically shows a preliminary implant necessary for most of the dental existing implants before introducing the implant in the bone for making the shape of the thread on the bone that houses the implant;

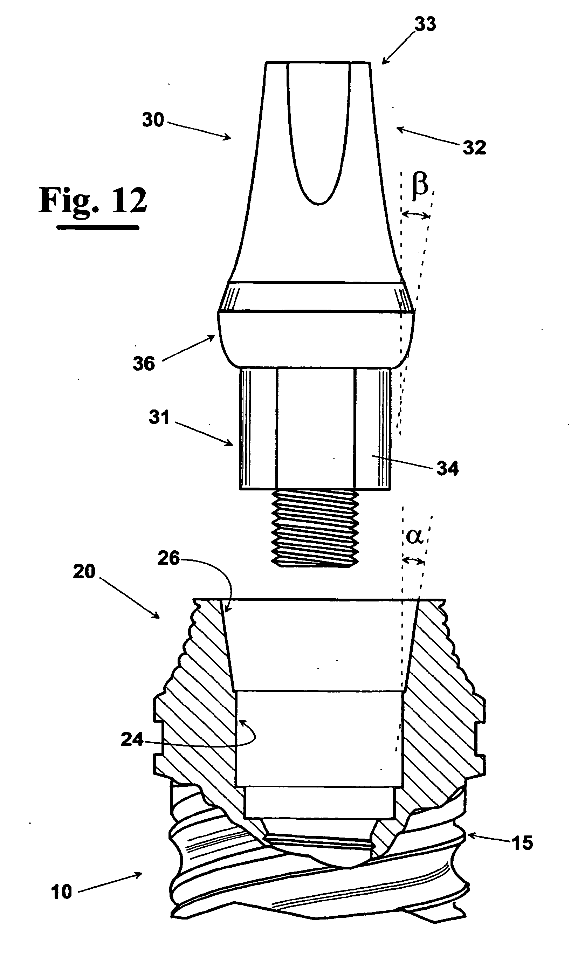

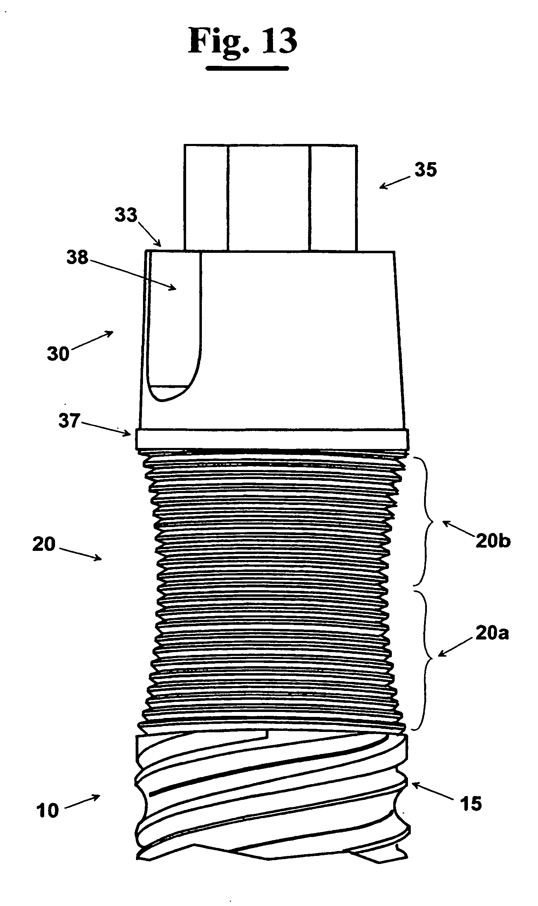

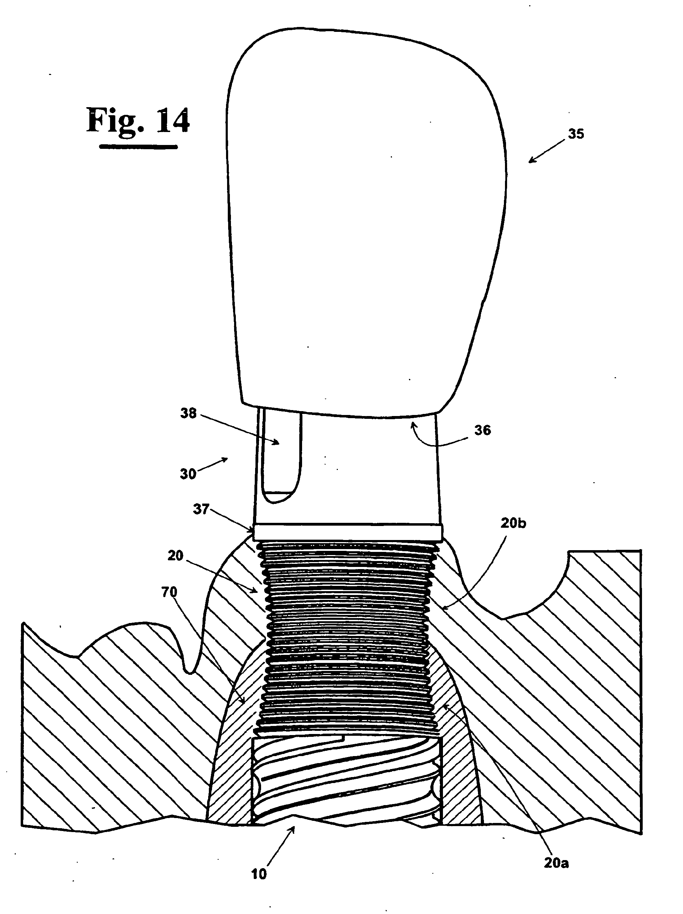

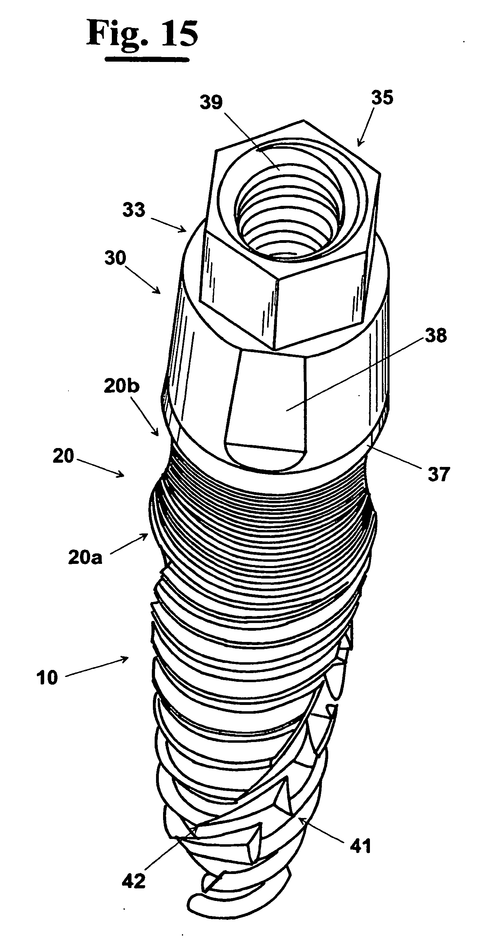

- Fig. 12 diagrammatically shows in a partial cross sectional view the prosthesis and the collar for highlighting the elements that perform the mutual engagement of the two parts;
- Figs. from 13 to 15 show an exemplary embodiment of the dental implant of Fig. 1;
- Figs. from 16 to 19 show diagrammatically front elevational views of some exemplary embodiments of the collar of the invention.

### Description of a preferred exemplary embodiment.

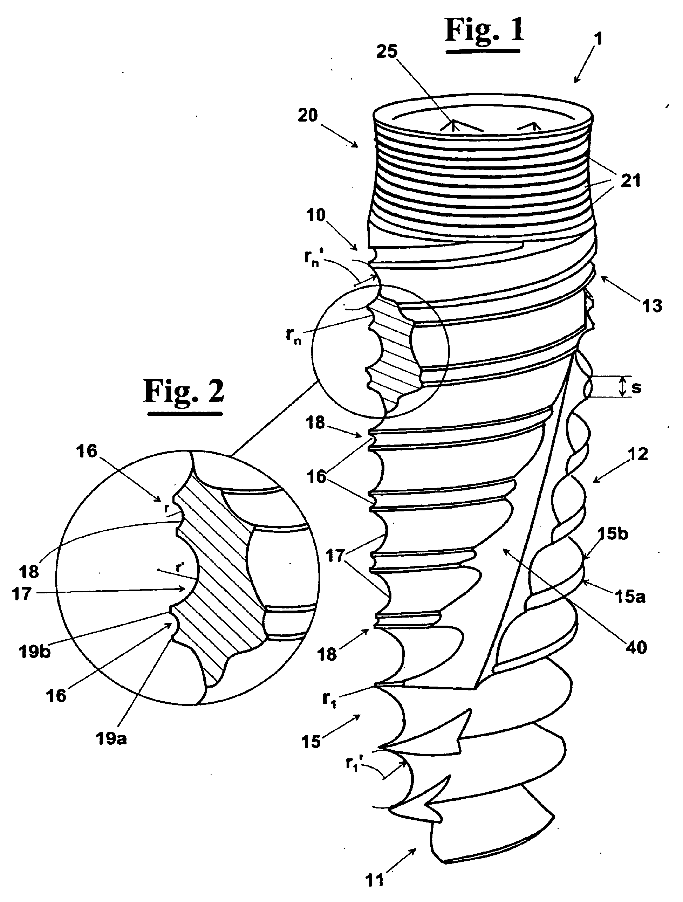

In Fig. 1 a first exemplary embodiment is shown of a dental implant 1, according to the invention, that is adapted to be located in the dental arches of a patient in an implant dentistry treatment. Dental implant 1 comprises, in particular, an endosseous body 10 having an apical portion 11, a central portion 12 and a crestal portion 13, along which a thread extends 15, and a collar 20, which in use is arranged at the cortical upper or lower jaw bone, near to the crestal cortical bone. The height of collar 20 can be advantageously set between 1.6 mm and 2.0 mm, preferably between 1.7 mm and 1.9 mm, for example 1.8 mm.

In particular, thread 15 is a double thread that comprises a first thread 15a equipped with a first series of ridges 19a and a second thread 15b equipped with a second plurality of ridges 19b.

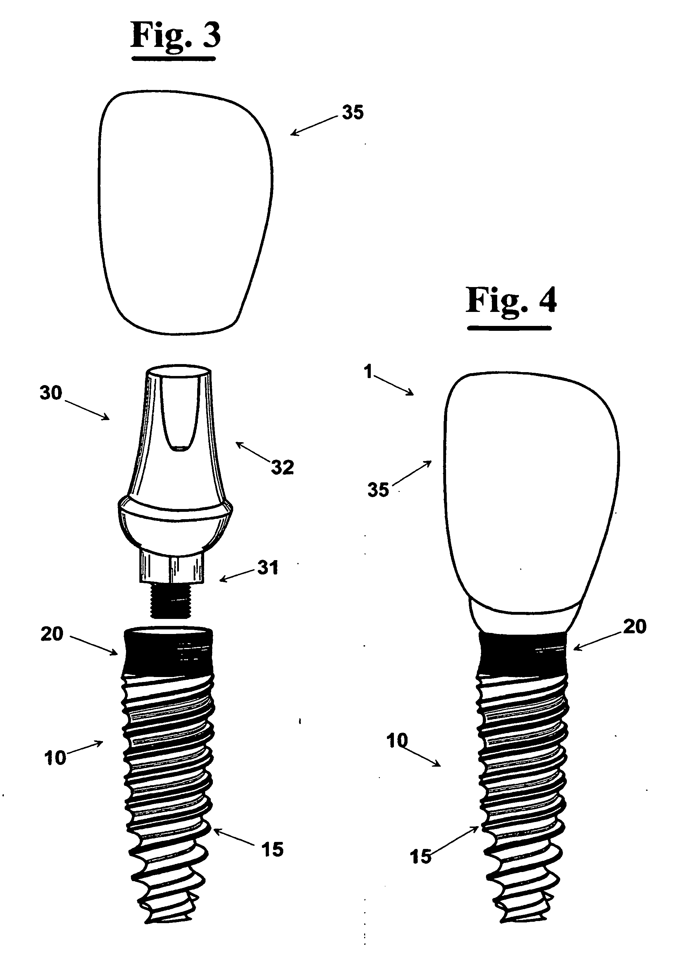

Dental implant 1 comprises, furthermore, a prosthetic pillar 30, or abutment tooth, having a first embracing portion 31 that is adapted to engage, in a rotationally blocked way, in a hole 25, for example a hexagonal hole, obtained in the upper surface of collar 20, and a second embracing portion protruding from collar 20 for a portion of predetermined length, in order to be located, in use, in the mouth of the patient. More precisely, the portion 32 protruding in the mouth is adapted to couple in a rotationally blocked way with a prosthetic component 35 (Figs. 3 and 4).

In particular, thread 15 comprises a plurality of ridges 16 spaced by root spaces 17. According to the invention and as shown in detail in Fig. 2, at least one part of threads 16, and, in particular, those arranged at the central portion 12 and at crestal portion 13, have a concave profile edge with a predetermined radius of curvature r. As shown always in Fig. 2, in addition to edge 18 of threads 16, also root space 17 has advantageously a concave profile having radius of curvature r' (Fig. 2). In particular, as diagrammatically shown in Fig. 1, the radius of curvature r' of root space 17 decreases going from apical portion 11 to crestal portion 13. More in detail, if r₁' is the radius of curvature of first root space 17 of endosseous body 10, r₁' is the maximum radius of curvature. The minimum radius of curvature between the different root spaces of endosseous body 10 is obtained, instead, at last root space 17 indicated as rₙ' in Fig. 1.

In the preferred exemplary embodiment, as shown in the figures, all root spaces 17 of the dental implant have a concave profile.

Furthermore, the double thread 15 has a thickness s that increases progressively, according to a determined function, going from apical portion 11 to crestal portion 13 of dental implant 1. Still with reference to Fig. 2, whereas the radius of curvature r' of root spaces 17 decreases progressively going from apical portion 11 to portion 13, the radius of curvature r, of the concavity of edge 18 increases progressively going from apical portion 11 to crestal portion 13. Such result is obtained by a tool, not shown in the figures, which when making the double thread reduces progressively its working depth in the material of dental implant 1 going from apical portion 11 to crestal portion 13. The reduction of the penetration of the tool in the material causes a progressive increase of the thickness of thread 15, i.e. an increase of the radius of curvature r of edge 18 going from apical portion 11 to crestal portion 13.

The concavity of edge 18 of threads 16 forms a double thread comprising two ridges 19a and 19b approached to each other and arranged at a distance that increases going from apical portion 11 to crestal portion 13 of dental implant 1. Furthermore, the concavities of edge 18 of thread 15 and of root spaces 17 perform a profile with incremental cut at the double helical groove that extends from apical portion 11 to crestal portion 13 of dental implant 1. More precisely, the incremental cut profile reduces the action torsion and the friction produced on bone 70 during the step of introducing dental implant 1.

The particular morphology of thread 15 and, in particular, the progressive increase of its thickness, as well as the concave profile of edge 18 of threads 16 and of root space 17, and the self-threading and self-tapping capacity, allow to optimize also the angle during the introduction of dental implant 1. Endosseous body 10 has, furthermore, a groove 40, in particular a double groove 40, which extends along a substantially vertical direction with respect to the implant and has substantially helical geometry. Groove 40 extends along dental implant 1 starting from apical portion 11, extends for all the length of the same and ends at crestal portion 13 at the border with collar 20 of the implant. Vertical helical groove 40 has the peculiar feature of being progressively shallower from apical portion 11 going towards crestal portion 13. Such feature, along with the features of the threads and of the root spaces, reduces the quantity of bone that has to be removed to prepare the implant site and promotes therefore the presence of a larger amount of bone to support the integration of the implant.

Normally, implant 1 comprises a predetermined number of substantially vertical grooves 40. They create the space necessary for recovering fragments of bone mixed to blood, rich of growth factors, which are generated during the progression of endosseous body 10 into bone 70 and therefore take part significantly both to speeding up and to qualitatively enhancing the process of osteointegration.

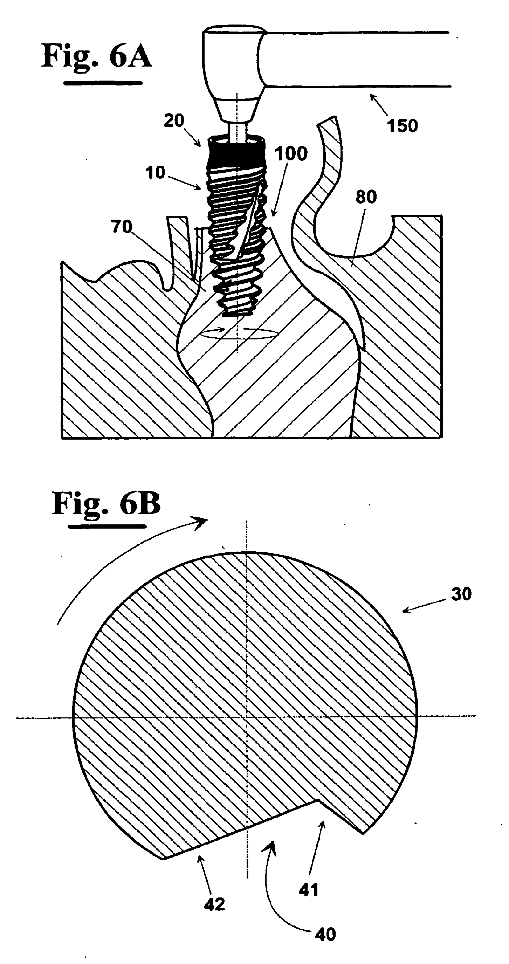

More in detail, during the introduction of dental implant 1 in bone 70, by a rotation in a clockwise direction (Figs. 6A and 6B), thread 15 at groove 40 has a non-cutting profile 41, i.e. "smooth" with respect to surrounding bone 70. This provides recovering possible chips of bone tissue obtained by screwing the implant in.

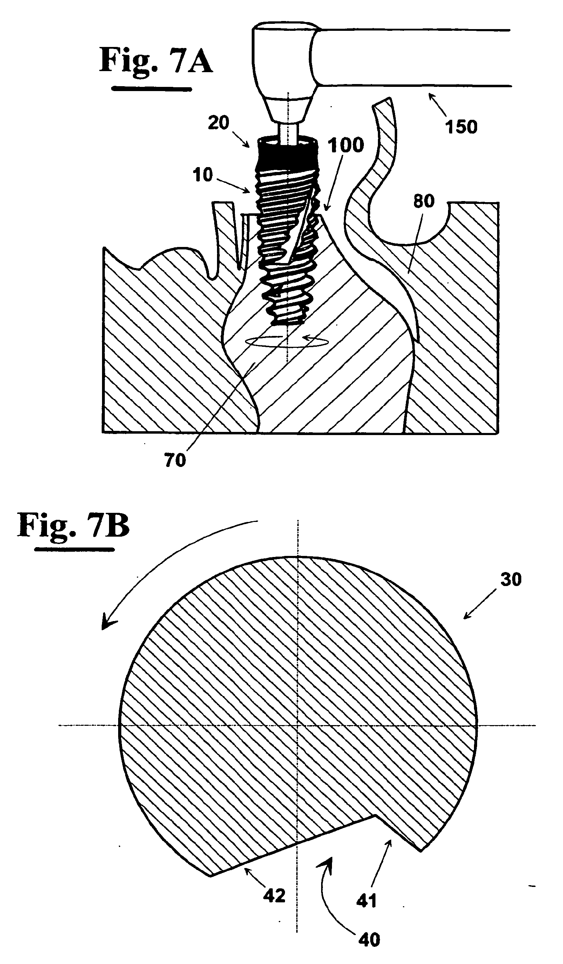

If unscrewing dental implant 1, by a rotation in a counterclockwise direction of the implant (Figs. 7A and 7B), as for example it occurs when a high resistance is opposed by the bone against the progression of the implant in the implant site, thread 15 has, instead, a cutting profiled edge 42. During this unscrewing step bone chips are produced in order to assist the final introduction of dental implant 10 in the implant site.

The morphological characteristics of threads 15 confer to dental implant 1 features of bone tapping tool. Thread 15 of implant 1, as above described, is, in fact, of self-tapping and self-threading type.

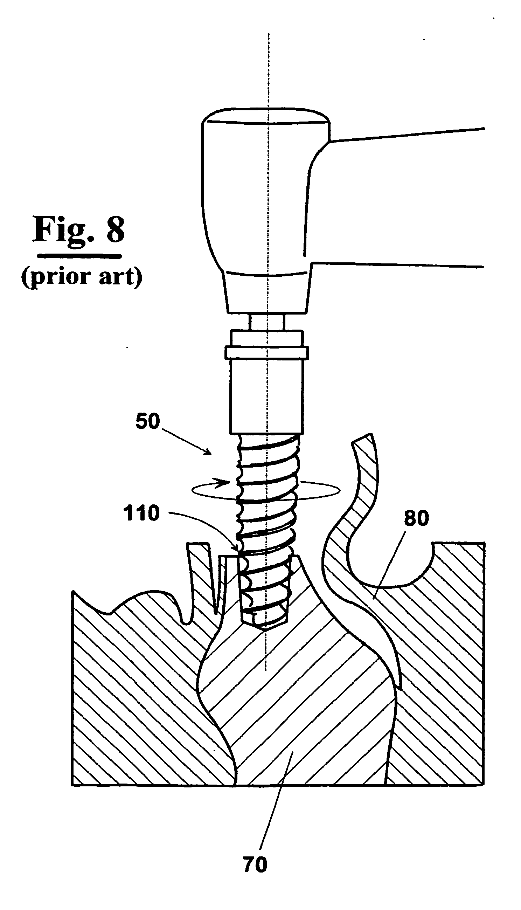

Therefore, the step of introducing dental implant 1 in implant site 100 is remarkably simplified with respect to other dental implants of the prior art. Self-tapping and self-threading thread profile 15, in fact, avoids the use of a tapping tool 50 to make in the bone tissue 70 a recess 110 that houses the dental implant (Fig. 8). Thread 15 reduces, furthermore, the stress generated during the step of introduction both on the bone and on implant 10.

All in all, the system comprised of threads 16, of root spaces 17 with concave profile and of vertical grooves 40 determines, owing to the progressive bone compaction, both in the apical-crown and lateral-side direction, a uniform contact with the surrounding bone and gives to implant 1 a high primary stability in implant site 100.

During the introduction step, the above described structural features allow to achieve a progressive compaction of the bone tissue, both vertical and horizontal, and to improve therefore its density near dental implant 1. More precisely, the increasing thickness s of threads 16 that is obtained going from apical portion 11 to crestal portion 13 is responsible of a vertical compaction of the bone that is higher at threads 16 of crestal portion 13 and lower at threads 16 of apical portion 11. The concavity of root spaces 17 is, instead, responsible of the horizontal compaction of the trabecular bone.

The above described features make dental implant 1 ideal for immediate loading. According to another aspect of the invention, collar 20 has a corrugated surface 21, i.e. a plurality of micro-grooves, or micro-channels, with retentive action. More precisely, the presence of micro-channels ensures an appropriate mechanical stimulation of the surrounding bone tissue. The micro-channels 21 of collar 20 allow, therefore, to provide a better bone integration, or osteointegration, and to avoid resorption of the bone tissue.

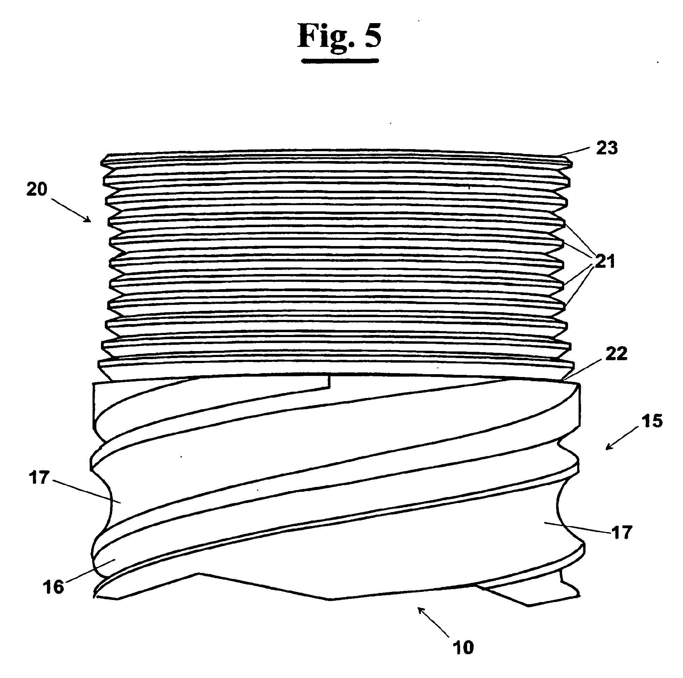

As shown in particular in Fig. 6A, collar 20 of endosseous body 10 has a tapered shape that, starting from end 22 (Fig. 5) next to crestal portion 13, grows thinner going towards opposite end 23 obtaining at the same time a substantially concave and frustoconical profile.

In particular, the concave profile of collar 20 can be substantially semiparabolic, or parabolic, or an arch of circumference. Such particular morphology increases the surface of collar 20 that is in contact with bone 70 and saves a larger amount of periosteum, in the most critical zone of the alveolar bone, i.e. in the cortical zone. The conicity of collar 20 achieves, furthermore, a less traumatic contact, with reduced pressure, on the cortical bone and avoids the compression of the blood vessels present in the corresponding zone of the alveolar bone. In order to enhance the criteria described of low compression on the cortical bone, the above described concavity is added to the conicity of collar 20. Such concavity provides to the cortical bone a higher transversal space for decompression of the volume of bone that is near the collar of implant 1, once it has been compressed by the movement of the larger threads. All these features allow saving a quantity of periosteum that therefore provides a better vascularization of the peri-implant soft tissues, such as the gum, with subsequent better trophism, better stability of the biological tightness as well as enhanced peri-implant biological amplitude and better aesthetic expressivity of the implant prosthetic rehabilitation.

The general morphology of implant 1 is substantially conic, owing to the conicity of the core of the implant. More precisely, edge 18 of thread 15 gives to implant 1 a substantially cylindrical aspect from crestal portion 13 to the fourth-from-last thread of endosseous body 10, and then it has a more conical profile up to apical portion 11. Such feature allows working a quicker and atraumatic engagement with the bone walls of the implant site.

Collar 20 and prosthetic pillar 30 have mutually coupled surfaces comprising first mutually coupled surfaces 24 and 34 with polyhedral shape, for example hexagonal cross section or other geometry, and second mutually coupled surfaces 26 and 36 with conical shape.

More precisely, first coupled surfaces 24 and 34 are adapted to avoid the relative rotation between prosthetic pillar 30 and collar 20. The second mutually coupled surfaces 26 and 36 are adapted, on the one hand, to increase the stability of the matching made by surfaces 24 and 34, and on the other hand to provide a hermetic matching between prosthetic pillar 30 and collar 20, in order to avoid biological liquid to leak between them. For this purpose, the conical surface of collar 20 can have, for example, a conicity α set between 6° and 10°, for example a conicity α of about 8° and the conical surface of the prosthetic pillar a conicity β about set between 7° and 11°, for example a conicity β equal to 9°.

In an exemplary embodiment of dental implant 1 shown in Figs. from 13 to 15, endosseous body 10, collar 20 and prosthetic pillar 30 are made as a single part. In particular, collar 20 of the endosseous body comprises a first substantially concave frustoconical portion 20a and a second substantially concave frustoconical portion 20b. More precisely, the first concave portion 20a is mirror-like with respect to second concave portion 20b, and is located, in use, at bone 70 of the patient, whereas the second substantially concave frustoconical portion is adapted to be located, in use, at the soft gum tissues such that the prosthetic pillar protrudes in the mouth. Both the first and the second substantially frustoconical mucous bone concave portion 20a and 20b of collar 20 have a corrugated, or micro-grooved, surface 21.

Different portions 10, 20 and 30 of the dental implant, as shown in Figs. from 13 to 15, do not have a clean separation. However, the border between the various portions 10-30 becomes clearer during the function and the clinical use of implant 1. The main advantage of an implant made of a single part is made up essentially of the absence of "gaps", i.e. separations, between endosseous body 10 and prosthetic abutement 30, and therefore absence of microbial penetration inbetween, that would cause inflammation and bone resorption. Such feature gives to implant 1 enhanced stabilizing features with respect to both of hard tissues, i.e. the bone, and soft tissues, i.e. the gum. Such features minimize the peri-implant bone resorption and confer trophism, stability and aesthetics to the soft tissues.

Concave profile 20, which separates the active endosseous portion, i.e. the screw-threaded portion, from the prosthetic portion, has exclusive characteristics. The total height of collar 20, for example about 3.6 mm, starts from crown portion 20b, at which it has a diameter of 3.3 mm, and then reduces to about 2.8 mm at the intermediate portion and returns again to about 3.3 mm at the basis of portion 20a.

As anticipated above, osteomucous collar 20 has a plurality of micro-channels, which for first portion 20a are intraosseous and reproduce the effects of micro-traumaticity, of non-compression and of maintenance of the alveolar bone, as described with reference to exemplary embodiment of Fig. 1. Intraosseous portion 20a of the micro-channels corresponding to the cortical area of the alveolar bone has an enhanced capacity of avoiding bone resorption, since it operates a uniform distribution of the chewing loads reducing the stress in the most critical zones of the alveolar bone, i.e. the cortical zones.

Micro-grooved trans-gum portion 20b, with frustoconical profile opposite to the previous, is adapted to contact soft tissues of the gum. Trans-gum portion 20b has the function to provide a micro-rough and micro-grooved surface for adhesion of connectival fibres of the peri-implant soft tissues, in order to stabilize the peri-implant gum tissue (inter-implant papillae), preventing possible recessions and improving the aesthetic result of the rehabilitation.

According to the invention, the dental implant penetrates the bone, according to the thickness of the soft tissues, so that the upper edge of the micro-grooved area is located in any case deep, about 1 mm-1.5 mm, with respect to the outer gum edge. The micro-grooved and micro-rough surface, with the frustoconical and concave profile of the mucous bone portion operates a homogeneous distribution of the occlusal stress in this area with the result of a better tissue trophism, assisted also by the biological effect of the "Bone Platform Switching" of the intraosseous portion located underneath. The global effect of the intermediate portion is to provide stability and trophism to the hard and soft tissues.

Prosthetic pillar 30, at the border with substantially frustoconical second portion 20b of collar 20, has a smooth small collar 37. This can be, for example, made with a chamfer or right shoulder preparation, and represents the closure edge for prosthetic component 35 reproducing the missing dental element, that is adapted to engage with prosthetic pillar 30.

In order to prevent prosthetic component 35 from rotating with respect to dental implant 1, prosthetic pillar 30 has a frustoconical morphology and has a flat face 38 that achieves a matching shape with the recess 39 of prosthetic component 35.

At the free end 33, i.e. the crown end, prosthetic pillar 30 has a slotted and multi-angle, for example hexagonal, protruding portion 35. More in detail, protruding portion 35 is adapted to engage with a respective portion of a predetermined tool used for carrying and inserting dental implant 1 in the implant site. Protruding portion 35, can be equipped with a screw-threaded recess 39 that is adapted to engage, for example, with the fastening screws of a rod for overdenture, not shown in the figures.

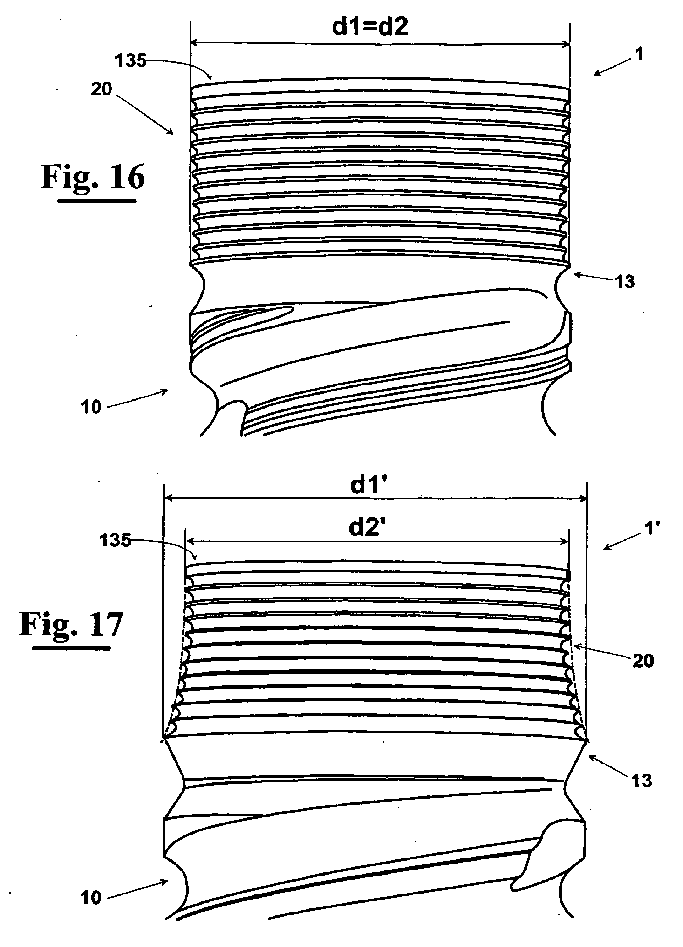

As diagrammatically shown in Figs. from 16 to 19, the "modular" conicity of collar 20 can be adjusted responsive to the diameter of dental implant 1. For example, in Fig. 16 a dental implant 1 is diagrammatically shown having a diameter d1, calculated at crestal portion 13, i.e. at the end 22 of collar 20, of about 3.75 mm. In this case, diameter d2 of prosthetic platform 135, i.e. of the end of collar 20 that is adapted to couple with prosthetic pillar 30, coincides substantially with d1, i.e. d2 is about 3.75 mm.

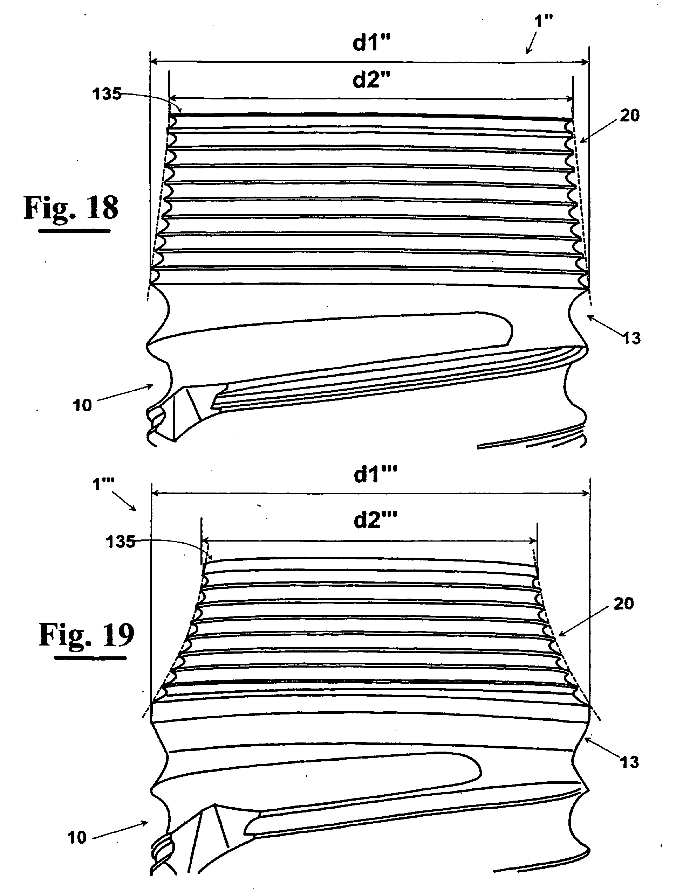

In Fig. 17, an exemplary embodiment 1' is shown of dental implant 1 of Fig. 16. In this case, diameter d1' is about 4.2 mm but the tapered portion of collar 20 forms a prosthetic platform 135 of 3.8 mm, i.e. d1'≠d2', and the ratio r' between d1' and d2' is about 1.10. Another exemplary embodiment 1" of dental implant 1 is shown in Fig. 18. In this case diameter d1" is about 5.0 mm and the tapered portion of collar 20 is such that prosthetic platform 135 has a diameter d2" of about 4.6 mm. Therefore, the ratio r" between d1" and d2" is about 1.08. A further exemplary embodiment 1"' of dental implant 1 is shown in Fig. 19. In this case, diameter d1"' of dental implant 1'" is about 6.00 mm and the tapered portion of collar 20 is such that prosthetic platform 135 has a diameter d2"' of about 4.6 mm. Therefore, the ratio r"' between d1"' and d2'" is about 1.30. In particular, the profile of collar 20 allows a contemporaneous application of the biological concepts of "Platform Switching" and of "Bone Platform Switching". In particular, the application of these two concepts causes a sinergy of biological effects in order to avoid the crestal bone resorption.

## Claims

1. A dental implant (1) that is adapted to be located in the dental arch of a patient in an implant dentistry treatment, said dental implant comprising an endosseous body (10) equipped with:
- an apical portion (11), a central portion (12) and a crestal portion (13) along which a thread extends (15) that comprises a plurality of ridges (16) alternated to a plurality of root spaces (17), at least one part of said plurality of ridges (16) having a concave profile edge (18) having a predetermined radius of curvature (r);
- a collar (20) next to said crestal portion (13) having a predetermined height, said collar (20) located, in use, at the surface of the crestal cortical upper or lower jaw bone of the patient;
**characterised in that** said radius of curvature (r) of said concave profile of said edge (18) of said ridges (16) increases progressively going from said apical portion (11) to said crestal portion (13).

2. Dental implant (1), according to claim 1, wherein said ridges (16) of said thread have a thickness (s) that increases progressively, according to a determined function, going from said apical portion (11) to said crestal portion (13).

3. Dental implant, according to claim 1, or 2, wherein at least one part of said root spaces (17) has a concave profile, to provide a space of decompression for surrounding bone tissue and for making a horizontal compaction of the trabecular bone.

4. Dental implant, according to claim 1, or 2, wherein all the root spaces (17) of said implant (1) have a concave profile with a predetermined radius of curvature (r'), said radius of curvature (r') of said root spaces (17) decreasing progressively going from said apical portion (11) to said crestal portion (13), to provide a self-tapping and bone-condensing implant.

5. Dental implant, according to claim 1, or 2, wherein said collar (20) of said endosseous body (10) has a corrugated surface (21) comprising a plurality of micro-grooves, or micro-channels (21), said micro-grooves, or micro-channels (21), adapted to apply a mechanical stimulation on said surrounding bone tissue and to improve the bone integration, in order to avoid the resorption of the bone tissue.

6. Dental implant, according to claim 1, or 2, wherein said collar (20) has a side tapered surface that grows thinner going from a first end (22) next to said crestal portion (13) towards a second end (23) opposite to said first end (22), to provide a substantially frustoconical shape.

7. Dental implant, according to claim 1, or 2, wherein said collar (20) has a frustoconical shape that has a side surface with substantially concave profile.

8. Dental implant, according to claim 1, or 2, wherein said collar (20) has a substantially concave profile selected from the group consisting of:
- a semiparabolic profile;
- a parabolic profile;
- an arch of circumference;
- an elliptical arch;
- or a combination thereof.

9. Dental implant, according to claim 1, or 2, wherein, furthermore, a prosthetic pillar (30) is provided that is adapted to couple with said collar (20) in a rotationally blocked way, said prosthetic pillar (30) located, in use, in the mouth of the patient, said collar (20) and said prosthetic pillar (30) having mutually coupled surfaces comprising:
- first mutually coupled surfaces (24, 34) arranged on respective polyhedral surfaces, said first coupled surfaces adapted to prevent a relative rotation between said prosthetic pillar (30) and said collar (20);
- second mutually coupled surfaces (26, 36) arranged on respective conical surfaces, said second mutually coupled surfaces (26, 36) adapted, on the one hand, to provide a hermetic matching between the prosthetic pillar (30) and the collar (20), in order to avoid biological liquid to leak between the two components, and on the other hand to increase the stability of the matching.

10. Dental implant, according to claim 1, or 2, wherein, furthermore, a prosthetic pillar (30) is provided, said endosseous body (10) and said prosthetic pillar (30) being made as a single part, and said collar (20) comprising:
- a first substantially concave frustoconical portion (20a), said first substantially concave frustoconical portion (20a) adapted, in use, to be put at the upper or lower jaw bone of a patient;
- a second substantially concave frustoconical portion (20b), said second substantially concave frustoconical portion (20b) located opposite to said first substantially concave frustoconical portion (20a), said second substantially concave frustoconical portion (20b) adapted to be located, in use, at the soft tissues, i.e. the gum of the patient, in particular said first and said second substantially concave frustoconical portion (20a, 20b) having a plurality of micro-channels (21).

11. Dental implant, according to claim 10, wherein said prosthetic pillar (30) has a free end (33) opposite to said collar (20), said free end (33) equipped with a hollow protruding multi-angle portion (35) that is adapted to engage with a predetermined tool used for carrying and introducing said dental implant (1) in an implant site (100), in particular said hollow protruding portion (35) having a screw-threaded recess (39) that is adapted to engage with at least one of the following elements:
- a ball fastening for overdenture;
- a screw fastening for a mesostructure implant;
- a rod for overdenture;
- a prosthesis of "Toron Bridge"and/or "Implant Bridge" type.

12. Dental implant, according to claim 1, or 2, wherein said endosseous body (10) has, furthermore, a groove (40), in particular a double groove, which extends along a substantially vertical direction, said thread having (15), at said substantially vertical groove (40), a non-cutting profile edge (41) during the introduction of said implant (1) in said implant site (100), and a cutting profile edge (42) during the extraction of said implant (1) from said implant site (100).

13. Dental implant (1), according to claim 1, wherein all said root spaces (17) have a concave profile with a predetermined radius of curvature (r'), said radius of curvature (r') of said root spaces (17) decreasing progressively going from said apical portion (11) to said crestal portion (13), to provide a self-tapping and bone-condensing implant.

## Patentansprüche

1. Dentalimplantat (1), das zur Positionierung im Zahnbogen eines Patienten bei einer Implantationszahnbehandlung eingerichtet ist, wobei das Dentalimplantat einen endossalen Körper (10) umfasst, der ausgestattet ist mit:
- einem apikalen Abschnitt (11), einem zentralen Abschnitt (12) und einem krestalen Abschnitt (13), längs denen sich ein Gewinde erstreckt (15), das mehrere Rippen (16) abwechselnd mit mehreren Fußräumen (17) umfasst, wobei mindestens ein Teil der mehreren Rippen (16) einen konkaven Profilrand (18) mit einem vorgegebenen Krümmungsradius (r) aufweist,
- einem Hals (20) neben dem krestalen Abschnitt (13) mit einer vorgegebenen Höhe, wobei der Hals (20) in Verwendung an der Oberfläche des krestalen kortikalen oberen oder unteren Kieferknochens des Patienten positioniert ist, **dadurch gekennzeichnet, dass** der Krümmungsradius (r) des konkaven Profils des Randes (18) der Rippen (16) von dem apikalen Abschnitt (11) zu dem krestalen Abschnitt (13) fortschreitend zunimmt.

2. Dentalimplantat (1) nach Anspruch 1, wobei die Rippen (16) des Gewindes eine Dicke (s) aufweisen, die von dem apikalen Abschnitt (11) zu dem krestalen Anschnitt (13) einer gegebenen Funktion entsprechend fortschreitend zunimmt.

3. Dentalimplantat nach Anspruch 1 oder 2, wobei mindestens ein Tell der Fußräume (17) ein konkaves Profil aufweist, um einen Raum zur Dekompression für umgebendes Knochengewebe und zum Durchführen einer horizontalen Kompaktierung des trabekularen Knochens bereitzustellen.

4. Dentalimplantat nach Anspruch 1 oder 2, wobei alle Fußräume (17) des Implantats (1) ein konkaves Profil mit einem vorgegebenen Krümmungsradius (r') aufweisen, wobei der Krümmungsradius (r') der Fußräume (17) von dem apikalen Abschnitt (11) zu dem krestalen Abschnitt (13) fortschreitend abnimmt, um ein selbstschneidendes und knochenverdichtendes Implantat bereitzustellen.

5. Dentalimplantat nach Anspruch 1 oder 2, wobei der Hals (20) des endossalen Körpers (10) eine rillierte Oberfläche (21) aufweist, die mehrere Mikrorillen oder Mikrokanäle (21) aufweist, wobei die Mikrorillen oder die Mikrokanäle (21) zum Ausüben einer mechanischen Stimulation auf das umgebende Knochengewebe und zur Verbesserung der Knochenintegration eingerichtet sind, um die Resorption des Knochengewebes zu vermeiden.

6. Dentalimplantat nach Anspruch 1 oder 2, wobei der Hals (20) eine sich verjüngende Seitenfläche aufweist, die von einem ersten Ende (22) neben dem krestalen Abschnitt (13) zu einem dem ersten Ende (22) entgegengesetzten zweiten Ende (23) hin dünner wird, um eine im Wesentlichen frustokonische Form bereitzustellen.

7. Dentalimplantat nach Anspruch 1 oder 2, wobei der Hals (20) eine frustokonische Form aufweist, die eine Seitenfläche mit einem im Wesentlichen konkaven Profil aufweist.

8. Dentalimplantat nach Anspruch 1 oder 2, wobei der Hals (20) ein im Wesentlichen konkaves Profil aufweist, das aus der Gruppe von:
- einem halbparabolischen Profil,
- einem parabolischen Profil,
- einem Umfangsbogen,
- einem elliptischen Bogen,
- oder einer Kombination hiervon ausgewählt ist.

9. Dentalimplantat nach Anspruch 1 oder 2, wobei ferner ein prothetischer Pfeiler (30) vorgesehen ist, der zur Kopplung mit dem Hals (20) in einer rotationsmäßig blockierten Weise eingerichtet ist, wobei der prothetische Pfeiler (30) in Verwendung im Mund des Patienten positioniert ist, wobei der Hals (20) und der prothetische Pfeiler (30) miteinander gekoppelte Oberflächen aufweisen, die umfassen:
- erste miteinander gekoppelte Oberflächen (24, 34), die auf jeweiligen Polyederflächen angeordnet sind, wobei die ersten gekoppelten Oberflächen zum Verhindern einer relativen Rotation zwischen dem prothetischen Pfeiler (30) und dem Hals (20) eingerichtet sind,
- zweite miteinander gekoppelte Oberflächen (26, 36), die an jeweiligen Konusflächen angeordnet sind, wobei die zweiten miteinander gekoppelten Oberflächen (26, 36) einerseits zum Bereitstellen einer hermetischen Verbindung zwischen dem prothetischen Pfeiler (30) und dem Hals (20), um das Austreten einer biologischen Flüssigkeit zwischen den zwei Komponenten zu verhindern, und anderseits zum Erhöhen der Stabilität der Verbindung eingerichtet sind.

10. Dentalimplantat nach Anspruch 1 oder 2, wobei ferner ein prothetischer Pfeiler (30) vorgesehen ist, der endossale Körper (10) und der prothetische Pfeiler (30) als ein einziges Teil hergestellt sind, und der Hals (20) umfasst:
- einen ersten, im Wesentlichen konkaven frustokonischen Abschnitt (20a), wobei der erste, im Wesentlichen konkave frustokonische Abschnitt (20a) eingerichtet ist, um in Verwendung an dem oberen oder unteren Kieferknochen eines Patienten angebracht zu werden,
- einen zweiten, im Wesentlichen konkaven frustokonischen Abschnitt (20b), wobei der zweite, im Wesentlichen konkave frustokonische Abschnitt (20b) entgegengesetzt zu dem ersten, im Wesentlichen konkaven frustokonischen Abschnitt (20a) positioniert ist, wobei der zweite, im Wesentlichen konkave frustokonische Abschnitt (20b) eingerichtet ist, um in Verwendung an den Weichgeweben, d.h. dem Zahnfleisch des Patienten positioniert zu werden, wobei insbesondere der erste und der zweite, im Wesentlichen konkave frustokonische Abschnitt (20a, 20b) mehrere Mikrokanäle (21) aufweisen.

11. Dentalimplantat nach Anspruch 10, wobei der prothetische Pfeiler (30) ein freies Ende (33) entgegengesetzt zu dem Hals (20) aufweist, wobei das freie Ende (33) mit einem hohlen vorstehenden mehrwinkeligen Abschnitt (35) ausgestattet ist, der zum Eingriff mit einem vorgegebenen Werkzeug, das zum Tragen und Einführen des Dentalimplantats (1) an einem Implantationsort (100) verwendet wird, eingerichtet ist, wobei insbesondere der hohle vorstehende Abschnitt (35) eine schraubengewindeförmige Eintiefung (39) aufweist, die zum Eingriff mit mindestens einem der im Folgenden angegebenen Elemente eingerichtet ist:
- einer Kugelbefestigung für eine Deckprothese,
- einer Schraubenbefestigung für ein Mesostrukturimplantat,
- einem Stab für eine Deckprothese,
- einer Prothese des "Toron-Brücken"- und/oder "Implantat-Brücken"-Typs.

12. Dentalimplantat nach Anspruch 1 oder 2, wobei der endossale Körper (10) ferner eine Rille (40), insbesondere eine Doppelrolle, die sich längs einer im Wesentlichen vertikalen Richtung erstreckt, aufweist, wobei das Gewinde (15) an der im Wesentlichen vertikalen Rille (40) einen während der Einführung des Implantats an dem Implantatort (100) nichtschneidenden Profilrand (41) und während der Extraktion des Implantats (1) von dem Implantatort (100) einen schneidenden Profilwand (42) aufweist.

13. Dentalimplantat (1) nach Anspruch 1, wobei alle Fußräume (17) ein konkaves Profil mit einem vorgegebenen Krummungsradius (r') aufweisen, wobei der Krummungsradius (r') der Fußräume (17) von dem apikalen Abschnitt (11) zu dem krestalen Abschnitt (13) fortschreitend abnimmt, um ein selbstschneidendes und knochenverdichtendes Implantat bereitzustellen.

## Revendications

1. Implant dentaire (1) conçu pour être placé dans l'arcade dentaire d'un patient dans le cadre d'un traitement de dentisterie par implant, ledit implant dentaire comprenant un corps endo-osseux (10) comprenant :
une partie apicale (11), une partie centrale (12) et une partie de crête (13) le long de laquelle un filet s'étend (15) qui comprend une pluralité de crêtes (16) en alternance avec une pluralité d'espaces de racine (17), au moins une partie de ladite pluralité de crêtes (16) ayant un bord de profil concave (18) ayant un rayon prédéterminé de courbure (r) ;
un collet (20) à côté de ladite partie de crête (13) ayant une hauteur prédéterminée, ledit collet (20) étant situé, lors de l'utilisation, à la surface de l'os de mâchoire supérieure ou inférieure cortical de crête du patient ;
**caractérisé en ce que** ledit rayon de courbure (r) dudit profil concave dudit bord (18) desdites crêtes (16) augmente progressivement de ladite partie apicale (11) vers ladite partie de crête (13).

2. Implant dentaire (1) selon la revendication 1, dans lequel lesdites crêtes (16) dudit filet ont une épaisseur (s) qui augmente progressivement, conformément à une fonction déterminée, de ladite partie apicale (11) vers ladite partie de crête (13).

3. Implant dentaire selon la revendication 1 ou 2, dans lequel au moins une partie desdits espaces de racine (17) a un profil concave, pour fournir un espace de décompression pour entourer le tissu osseux et pour réaliser un compactage horizontal de l'os trabéculaire.

4. Implant dentaire selon la revendication 1 ou 2, dans lequel tous les espaces de racine (17) dudit implant (1) ont un profil concave avec un rayon prédéterminé de courbure (r'), ledit rayon de courbure (r') desdits espaces de racine (17) diminuant progressivement de ladite partie apicale (11) vers ladite partie de crête (13), pour fournir un implant autotaraudeur et à condensation osseuse.

5. Implant dentaire selon la revendication 1 ou 2, dans lequel ledit collet (20) dudit corps endo-osseux (10) a une surface ondulée (21) comprenant une pluralité de microrainures, ou microcanaux (21), lesdites microrainures, ou microcanaux (21), étant conçus pour appliquer une stimulation mécanique sur ledit tissu osseux environnant et pour améliorer l'intégration de l'os, afin d'éviter la résorption du tissu osseux.

6. Implant dentaire selon la revendication 1 ou 2, dans lequel ledit collet (20) a une surface conique latérale qui s'amincit d'une première extrémité (22) à côté de ladite partie de crête (13) vers une seconde extrémité (23) opposée à ladite première extrémité (22), pour fournir une forme sensiblement tronconique.

7. Implant dentaire selon la revendication 1 ou 2, dans lequel ledit collet (20) a une forme tronconique qui a une surface latérale avec un profil sensiblement concave.

8. Implant dentaire selon la revendication 1 ou 2, dans lequel ledit collet (20) a un profile sensiblement concave choisi dans le groupe constitué de :
un profil semi-parabolique ;
un profil parabolique ;
un arc de circonférence ;
un arc elliptique ;
ou une combinaison associée.

9. Implant dentaire selon la revendication 1 ou 2, dans lequel, en outre, un pilier prothétique (30) est prévu qui est conçu pour se coupler avec ledit collet (20) de manière bloquée en rotation, ledit pilier prothétique (30) étant situé, lors de l'utilisation, dans la bouche du patient, ledit collet (20) et ledit pilier prothétique (30) ayant des surfaces mutuellement couplées comprenant :
des premières surfaces mutuellement couplées (24, 34) disposées sur des surfaces polyédriques respectives, lesdites premières surfaces couplées étant conçues pour empêcher une rotation relative entre ledit pilier prothétique (30) et ledit collet (20) ;
des secondes surfaces mutuellement couplées (26, 36) disposées sur des surfaces coniques respectives, lesdites secondes surfaces mutuellement couplées (26, 36) étant conçues, d'une part, pour fournir une adaptation hermétique entre le pilier prothétique (30) et le collet (20), afin d'éviter les fuites de liquide biologique entre les deux composants, et d'autre part d'augmenter la stabilité de l'adaptation.

10. Implant dentaire selon la revendication 1 ou 2, dans lequel, en outre, un pilier prothétique (30) est prévu, ledit corps endo-osseux (10) et ledit pilier prothétique (30) étant réalisés en une seule pièce, et ledit collet (20) comprenant :
une première partie tronconique sensiblement concave (20a), ladite première partie tronconique sensiblement concave (20a) étant conçue, lors de l'utilisation, pour être placée au niveau de l'os de la mâchoire supérieure ou inférieure d'un patient ;
une seconde partie tronconique sensiblement concave (20b), ladite seconde partie tronconique sensiblement concave (20b) étant située à l'opposé de ladite première portion tronconique sensiblement concave (20a), ladite seconde partie tronconique sensiblement concave (20b) étant conçue pour être située, lors de l'utilisation, au niveau des tissus mous, à savoir la gencive du patient, en particulier lesdites première et seconde parties sensiblement tronconiques concaves (20a, 20b) ayant une pluralité de microcanaux (21).

11. Implant dentaire selon la revendication 10, dans lequel ledit pilier prothétique (30) a une extrémité libre (33) opposée audit collet (20), ladite extrémité libre (33) comprenant une partie multi-angle en saillie creuse (35) conçue pour venir en prise avec un outil prédéterminé utilisé pour transporter et introduire ledit implant dentaire (1) dans un site d'implant (100), en particulier ladite partie en saillie creuse (35) ayant un évidement à filetage de vis (39) conçu pour venir en prise avec au moins l'un des éléments suivants :
une boule de fixation pour prothèse ;
une vis de fixation pour implant de mésostructure ;
une tige de prothèse ;
une prothèse du type « prothèse partielle fixe Toron » et/ou « prothèse partielle fixe sur implant ».

12. Implant dentaire, selon la revendication 1 ou 2, dans lequel ledit corps endo-osseux (10) a, en outre, une rainure (40), en particulier une double rainure, qui s'étend le long d'une direction sensiblement verticale, ledit filet ayant (15), au niveau de ladite rainure sensiblement verticale (40), un bord de profil non coupant (41) pendant l'introduction dudit implant (1) sur ledit site d'implant (100), et un bord de profil coupant (42) pendant l'extraction dudit implant (1) dudit site d'implant (100).

13. Implant dentaire (1), selon la revendication 1 dans lequel tous les espaces de racine (17) ont un profil concave avec un rayon prédéterminé de courbure (r'), ledit rayon de courbure (r') desdits espaces de racine (17) diminuant progressivement de ladite partie apicale (11) vers ladite partie de crête (13), pour fournir un implant autotaraudeur et à condensation osseuse.
